# EUROPEAN PATENT SPECIFICATION

(11) **EP 2 396 863 B1**
(45) Date of publication and mention of the grant of the patent: **29.06.2016**
(21) Application number: 10702127.1
(22) Date of filing: 02.02.2010
(51) Int. Cl.: H02G 3/22, F16L 5/00

(54) **A PIPE OR CABLE LEAD-THROUGH HAVING LAYERS OF DIFFERENT THICKNESS**
KABEL- ODER ROHRDURCHFÜHRUNG MIT UNTERSCHIEDLICH DICKEN SCHICHTEN
PASSAGE DE CÂBLE OU TUYAU AVEC COUCHES D'ÉPAISSEURS DIFFÉRENTS

(30) Priority: 04.02.2009 SE 0950042
(43) Date of publication of application: 21.12.2011
(73) Proprietor: Roxtec AB, 371 23 Karlskrona (SE)
(72) Inventor: ANDERSSON, Jens, S-370 23 Hasslö (SE); ERICSON, Mats, S-374 51 Asarum (SE); FILIPSEN, Jenny, S-371 31 Karlskrona (SE); HILDINGSSON, Ulf, S-370 24 Nättraby (SE); LUNDBORG, Christer, S-371 32 Karlskrona (SE); MILTON, Stefan, S-373 02 Ramdala (SE); PETTERSSON, Ronnie, S-373 00 Jämjö (SE); ÅKESSON, Jörgen, S-371 94 Lyckeby (SE)
(74) Representative: Ström & Gulliksson AB
(86) International application number: PCT/EP2010/051227
(87) International publication number: WO 2010/089285

(56) References cited:
- WO-A1-03/025446
- DE-A1- 3 635 593
- DE-U1- 8 707 566

## Description

### Technical Field

The present invention concerns a seal, lead-through or transit for cables or pipes. The invention especially concerns parts of the seal or transition, having peelable sheets for adaptation to diameters of a cable or pipe to be received.

### Prior Art

In the prior art there are cable transitions or the like having a frame, inside which a number of modules to receive cables, wires or pipes are placed. The modules are made of an elastic material e.g. rubber or plastics and are thus compressible. Inside the frame normally a number of modules are received side by side in one or more rows together with some kind of compression unit. The compression unit is placed between the frame and the modules in such a way that when the compression unit is expanded the compressible modules will be compressed around the cables, wires or pipes. For ease of description the expression "cable" is mainly used in this description, but it should be construed broadly and a person skilled in the art realises that it normally also covers pipes or wires.

An alternative system including a frame is described in the simultaneously filed application entitled "Sealing System", filed by the applicant of the present application. This application is hereby incorporated by reference.

Another type of seal, cable transition, pipe penetration etc. has a general cylindrical form and is to be received in a sleeve in a wall or an opening in a wall. To function in the desired way the seal should fit snugly into the sleeve or the opening of the wall in which it is received and the seal should be adaptable to the actual mounting dimension. The mounting dimension is dictated by the inner diameter of the sleeve or the opening. The seal has a cylindrical compressible body, which is compressed axially between fittings at the opposite ends of the compressible body. By the axial compression the cylindrical body will expand radially both inwards and outwards.

Furthermore, the pipes, wires or cables received may have different outer diameters, and, thus, the module should be adaptable to cables or pipes having different outer diameters.

Seals or transitions of both the above kinds are used for sealing in many different environments, such as for cabinets, technical shelters, junction boxes and machines. They are used in different industrial environments, such as automotive, telecom, power generation and distribution, as well as marine and offshore. The seals or transitions may have to seal against fluid, gas, fire, rodents, termites, dust, moisture etc., and may receive cables or wires for electricity, communication, computers etc., pipes for different gases or liquids such as water, compressed air, hydraulic fluid and cooking gas or wires for load retention.

The parts receiving a single cable etc. of both the types discussed above often have a pack of peelable layers or sheets on the inside. The layers or sheets are peeled off until the inner diameter of the part is adapted to the outer diameter of the cable received in said part. The sheets adhere strong enough to each other to stay together and at the same time loose enough to enable the sheets to be peeled off from the stack, either one-by-one or a number of sheets together. In some embodiments there are also peelable layers or sheets on the outside, making it possible to adapt the outer dimensions of for instance a circular seal to a specific opening or sleeve.

A person skilled in the art realises that the exact shape and form of the different parts, including the layers, may vary without departing from the gist of the present invention. For example the pack of layers may have another cross sectional form than circular.

The basic function of the above modules and systems are considered to be well known to the skilled person, e.g. from the numerous published patent applications filed by the present applicant.

WO 03/025446 concerns a seal for a cable according to the preamble of claim 1. To adapt the outer diameter of the seal to a sleeve or the like receiving the seal, a number of outer peeling sheets are arranged on the outside of the seal. The seal has also a number of inner peeling sheets to adapt the inner diameter of the seal to a cable or the like to be received.

DE 3635593 shows a sealing system formed of a frame receiving a number of modules. Each module is made of two halves and one cable may be received inside each module. The inner diameter of the module may have pre-stamped cavities in order to receive a cable or the like in a sealed way.

DE 8707566 discloses a seal-ring with removable ring elements. The ring elements are removed to adapt the inner diameter of the seal-ring to the outer diameter of a tube or the like to be received inside the seal-ring.

The aim of the present invention is to provide a new and improved seal or transition, having properties making it preferential for certain applications.

### Summary

The above aim is achieved with the features of claim 1.

The inventive compressible seal or lead-through, as well as a sealing system including the seal in the form of a module is defined by the independent claims. Preferred embodiments are defined by the dependent claims. Specific exemplifying embodiments are described in the following detailed description, which is given referring to the appended drawings.

To this end the present invention provides a compressible seal or lead-through for cables, wires or pipes having two or more compressible base parts surrounding each cable, wire or pipe, which seal or lead-through is placed either directly in an opening through a wall or other structural partition forming the wall or other partition or in a frame. A barrier is formed of the two or more base parts and at least one compression unit in either the opening or the frame, wherein each base part has peelable sheets for adapting to the diameter of a cable, wire or pipe. Peelable sheets of at least two different qualities are placed in each base part. The different qualities are either different thicknesses or different rigidities. The advantages of the present invention are discussed in the detailed description.

In one or more embodiments at least one peelable layer is made of a material selected from the group comprising: gel, gel with skin, cellular rubber of EPDM, NBR, PUR, TPE, soft rubber of silicon, but also gelatin, cork leather, or combinations thereof. These materials are examples of potential materials that may be selected for the peelable layer(s). Note that it is not required that all peelable layers have the same properties, rather in one or more embodiments at least one support layer having a smaller thickness and a greater rigidity than said at least one peelable layer is arranged adjacent to said at least one peelable layer.

The compressible module may advantageously be used in a sealing system comprising a frame for cable entries or pipe penetrations receiving compressible modules surrounding each cable or pipe received in the frame, which frame is placed in a wall of other structural partition forming an opening through the wall or other partition, whereby a barrier of modules are placed together with at least one compression unit at one end of the frame, wherein said compressible module is a module according to previous or following description.

### Brief Description of the Drawings

Fig. 1 is a perspective partial view of a compressible module according to a first embodiment of the present invention.
Fig. 2 is a perspective partial view of a compressible module according to a second embodiment of the present invention.
Fig. 3 is a perspective partial view of a compressible module according to a third embodiment of the present invention.
Fig. 4 is a perspective partial view of a compressible module according to a fourth embodiment of the present invention.
Fig. 5 is a perspective partial view of a cylindrical lead-through.

### Detailed Description of Embodiments

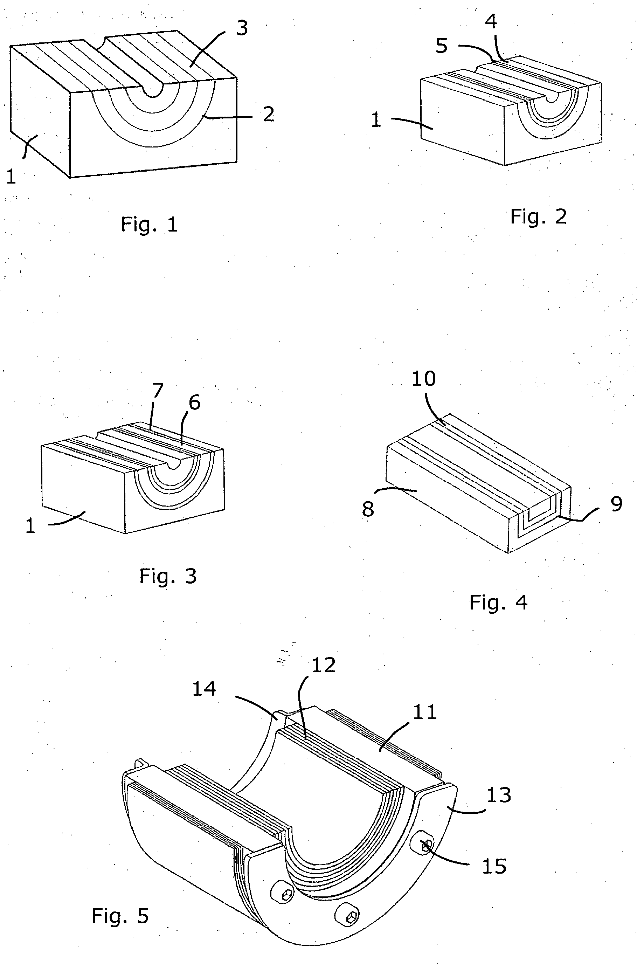

Fig. 1 illustrates a first embodiment of an inventive compressible module half or base part 1. The module half or base part 1 has a semi-cylindrical groove 2 in which peelable sheets or layers 3 are arranged. The base part 1 is made of a rubber material or other resilient polymer, so as to enable compression. The peelable sheets 3 are in this embodiment made of a foamed polymer, such as cellular rubber of EPDM. The peelable sheets maybe made of another material having the properties of being able to provide a certain degree of sealing, being compressible, and being resilient. Examples include, but are not limited to: Cellular rubber of EPDM, NBR, PUR, TPE, soft rubber of silicon, but also gelatine, cork leather etc.

Fig. 1 illustrates one module half or base part 1 only, and in use an identical half will be placed on top of the first, clamping a service (cable, pipe, wire etc) there between. The peelable sheets 3 have a thickness corresponding to about 1/5 of the height of the base part 1, or about 1/10 of the height of the entire module. This is far thicker than today's peelable sheets, and it gives the advantages of simplified assembly and thus shorter installation times. The main reason is that the decision of the number of sheets to be removed is not as delicate as for prior art compressible modules having thinner peelable sheets. The most apparent advantage is thus is that the compressible module 100 will be able to adapt to a wider range of cable dimensions with a lower number of peelable sheets 3.

Another advantage is that the module will be able to absorb larger axial and radial movements, which may be caused by tension loads, vibrations, thermal expansion, etc. Fewer peelable layers also give the beneficial effect that the risk of pulling away the wrong number of layers is reduced, which leads to a shorter installation time. The peelable layers may be softer than prior art layers, which results in a lower pressure onto the cable received therein. This is an advantage when working with sensitive cables. The precision in the manufacturing process will also be less critical which will be beneficial for the production rate. In most cases the material used for the peelable layers of the invention will have lower density than present peelable layers, resulting in a lower total weight of the module. This is an advantage when transporting the products, since less energy will have to be used.

In those embodiments using a foamed material in the peelable layers the thermal insulation will be improved.

In the embodiment of Fig. 2 the module half or base part 1, as such, is identical with the base part of Fig. 1. In this embodiment sheets of different thickness are received in the semi-cylindrical groove 2. Thus, thicker sheets 4 and thinner sheets 5 are placed alternating in the semi-cylindrical groove 2.

The embodiment of Fig. 3 differs from the embodiment of Fig. 2 only in that the positions of thicker sheets 6 and thinner sheets 7 are placed in a different order. A person skilled in the art realises that the order of thinner and thicker layers may vary.

Fig. 4 illustrates a module half or base part 8 for a compressible module according to a further embodiment of the present invention. The embodiment illustrated therein resembles the ones described in previous Figs., having a base part 8 but with a rectangular groove 9 instead of a semicylindrical one. The peelable sheets 10 also follow an angled path, as is evident from Fig 4. Thanks to the resilience of the sheets the module will be able to, without altering the design of the compressible module halves or the groove therein, adapt to a number of different cable cross-sections, such as, elliptical, rectangular, triangular etc. This is a clear improvement as compared to prior art modules, where an alteration of the module design was required to accommodate cables having different cross sections, see e.g. EP-A-1 634 354. Also, the groove does not have to be semicircular in order to be able to receive part of a cable with circular cross section. Instead it could be triangular, rectangular, etc.

Alternative embodiments of the modules are given in the simultaneously filed applications entitled "Eccentric Part of a Pipe or Cable Lead-Through", "A Pipe or Cable Lead-Through having a Part Indicating Compression", "A Module of a Pipe or Cable Lead-Through having Grooves on Opposite Sides", "Pipe or Cable Lead-Through Blocks", "Modules of a Pipe or Cable Lead-Through having Alternating Geometry", "A Pipe or Cable Lead-Through having Modularized Modules", "A Pipe or Cable Lead-Through having Penetrateable Modules", "A Pipe or Cable Lead-Through having Modules with a Dimensioning Function" and "A Pipe or Cable Lead-Through having Layers of Alternating Geometry", filed by the applicant of the present application. In one embodiment the modules are separated from a stack of module halves sticking together, as described in the simultaneously filed application named "Modules of Pipe or Cable Lead-Through Sticking Together", filed by the applicant of the present application. These applications are hereby incorporated by reference.

In Fig. 5 a general example of one half of a cylindrical seal or lead-through is shown. Each half of the cylindrical seal comprises a compressible base part 11 having a number of peelable sheets 12. At respective ends of the base part 11 fittings 13, 14 are arranged. Screws 15 go through openings in the fittings 13, 14 and the base part 11. By means of the screws 15 and the fittings 13, 14 the base part 11 may be compressed. In the embodiment of Fig. 5 there are also peelable sheets on the outside of the base part 11. Also in a cylindrical seal, such as that exemplified in Fig. 5, the sheets may have different thickness in the same way as discussed above. In use two base parts are placed on top of each other to form a cylindrical opening for receiving a cable, wire or pipe.

In another embodiment the additional support layers of a more rigid material in interlayer between the more resilient layers. One example may be that every other layer is a support layer having higher rigidity (which consequently may be thinner). By utilizing such a configuration it may be possible to arrange one or more layers having a greater width and higher resilience with the purpose of accommodating cables or pipes in a specific size region, and adjacent to these layers arrange a support layer, distributing the loads from the layers on top in a suitable way (i.e. over a larger surface area than what would have been the case without the support layer). Below (e.g. radially outside of) the support layer additional layers having a greater width and resilience may follow, which in turn may be supported by another support layer, and so forth.

The sheets may be arranged in many different ways and with different features as reflected in the simultaneously filed applications entitled " A Pipe or Cable Lead-Through having Interconnected Layers", "Cohering Between Layers of a Pipe or Cable Lead-Through" and "Identification of Layers of a Pipe or Cable Lead-Through", filed by the applicant of the present application. These applications are hereby incorporated by reference.

As may be understood from the above, the general inventive concept is to use fewer and more resilient peelable layers. Since fewer layers are used to cover the same interval of service diameters, it is relevant to characterize the compressible modules in terms of the thickness of the peelable layer relative to the dimension of the compressible module. A preferred interval is therefore that the thickness of the peelable sheets resides in the interval of 1/20-1/4 of the size of the compressible module. In the embodiments described in this application the "size of the compressible module" would correspond to the height or the width of the compressible module. In other embodiments each sub part is provided with several grooves, and in such an embodiment the "size of the compressible module" would correspond to the smallest of the height or the width.

In alternative embodiments the seal, lead-through or transit of the present invention is furnished with means for lubrication as shown in the simultaneously filed application entitled "Lubrication of a Pipe or Cable Lead-Through", filed by the applicant of the present application. This application is hereby incorporated by reference.

## Claims

1. A compressible seal or lead-through for cables, wires or pipes having two or more compressible base parts (1, 8, 11) surrounding each cable, wire or pipe, which seal or lead-through is placed either directly in an opening through a wall or other structural partition forming the wall or other partition or in a frame, whereby a barrier is formed of the two or more base parts (1, 8, 11) and at least one compression unit in either the opening or the frame, wherein each base part (1,8, 11) has peelable sheets (3-7, 10, 12) for adapting to the diameter of a cable, wire or pipe, **characterized in that** the peelable sheets (3-7, 10, 12) have different thickness, that it is a module formed of two base parts (1, 8) and having a rectangular outer form, whereby a groove (2, 9) is formed in each base part (1, 8), which groove (2, 9) receives a number of peelable sheets (2-7, 10) and that at least one peelable sheet (2-7, 10, 11) has a thickness residing in the interval of about 1/20 - 1/4 of the size of the compressible module in the corresponding direction.

2. The seal or lead-through of claim 1, wherein the peelable sheets (3-7, 10, 12) have different rigidity.

3. The seal or lead-through of any of the previous claims, wherein at least one peelable sheet is made of a material selected from the group comprising: gel, gel with skin, cellular rubber of EPDM, NBR, PUR, TPE, soft rubber of silicon, but also gelatin, cork leather, or combinations thereof.

4. A sealing system comprising a frame for cable entries or pipe penetrations receiving compressible modules surrounding each cable or pipe received in the frame, which frame is placed in a wall of other structural partition forming an opening through the wall or other partition, whereby a barrier of modules are placed together with at least one compression unit at one end of the frame, wherein said compressible module is a module according to any of the claims 1-3.

## Patentansprüche

1. Zusammendrückbare Abdichtung oder Durchführung für Kabel, Drähte oder Leitungen mit zwei oder mehr zusammendrückbaren Basisteilen (1, 8, 11), die jedes Kabel, jeden Draht oder jede Leitung umgeben, welche Abdichtung oder Durchführung entweder direkt in einer Öffnung durch eine Wand oder einen anderen strukturellen Teil ausbildend die Wand oder einen anderen Teil oder in einem Rahmen angeordnet ist, wodurch eine Barriere aus den zwei oder mehr Basisteilen (1, 8, 11) gebildet ist, und mit wenigstens einer Zusammendrückeinheit in entweder der Öffnung oder dem Rahmen, wobei jedes Basisteil (1, 8, 11) abziehbare Blätter (3-7, 10, 12) zum Anpassen des Durchmessers eines Kabels, eines Drahts oder einer Leitung aufweist, **dadurch gekennzeichnet, dass** die abziehbaren Blätter (3-7, 10, 12) unterschiedliche Dicke aufweisen, dass es ein Modul gebildet aus zwei Basisteilen (1, 8) ist und eine rechtwinklige äußere Form aufweist, wobei eine Rille (2, 9) in jedem Basisteil (1, 8) gebildet ist, welche Rillte (2, 9) eine Anzahl von abziehbaren Blättern (2-7, 10) aufnimmt, und dass wenigstens ein abziehbares Blatt (2-7, 10, 11) eine Dicke aufweist, die in dem Intervall von etwa 1/20-1/4 der Größe des zusammendrückbaren Moduls in der korrespondierenden Richtung liegt.

2. Abdichtung oder Durchführung nach Anspruch 1, wobei die abziehbaren Bögen (3-7, 10, 12) unterschiedliche Steifigkeit aufweisen.

3. Abdichtung oder Durchführung nach einem der vorangehenden Ansprüche, wobei wenigstens ein abziehbarer Bogen hergestellt ist aus einem Material ausgewählt aus der Gruppe umfassend: Gel, Gel mit Haut, zellenartigen Kautschuk aus EPDM, NBR, PUR, TPE, Weichkautschuk aus Silikon, jedoch ebenfalls Gelatine, Korkleder oder Kombinationen derselben.

4. Abdichtungssystem umfassend einen Rahmen für Kabeleinführungen oder Leitungsdurchdringungen, aufnehmend zusammendrückbare Module umgebend jedes Kabel oder jede Leitung, das bzw. die in dem Rahmen aufgenommen ist, welcher Rahmen in einer Wand eines anderen strukturellen Teils ausbildend eine Öffnung durch die Wand oder eines anderen Teils angeordnet ist, wodurch eine Barriere von Modulen zusammen mit wenigstens einer Zusammendrückeinheit an einem Ende des Rahmens angeordnet ist, wobei besagtes zusammendrückbares Modul ein Modul nach einem der Ansprüche 1-3 ist.

## Revendications

1. Joint ou traversée compressible pour des câbles, fils ou tuyaux comportant deux parties de base compressibles (1,8, 11) ou plus entourant chaque câble, fil ou tuyau, lequel joint ou laquelle traversée est placé soit directement dans une ouverture à travers une paroi ou une autre cloison structurale formant la paroi ou l'autre cloison soit dans un cadre, moyennant quoi une barrière est composée des deux parties de base (1, 8, 11) ou plus et au moins une unité de compression soit dans l'ouverture soit dans le cadre, chaque partie de base (1, 8, 11) ayant des feuilles pelables (3-7, 10, 12) permettant de s'adapter au diamètre d'un câble, d'un fil ou d'un tuyau, **caractérisé en ce que** les feuilles pelables (3-7, 10, 12) ont une épaisseur différente, **en ce qu'**il s'agit d'un module composé de deux parties de base (1, 8) et ayant une forme externe rectangulaire, moyennant quoi une rainure (2, 9) est formée dans chaque partie de base (1, 8), laquelle rainure (2, 9) reçoit un certain nombre de feuilles pelables (2-7, 10) et **en ce que** la au moins une feuille pelable (2-7, 10, 11) a une épaisseur se trouvant dans l'intervalle d'environ 1/20 à 1/4 de la taille du module compressible dans la direction correspondante.

2. Joint ou traversée selon la revendication 1, dans lequel les feuilles pelables (3-7, 10, 12) ont une rigidité différente.

3. Joint ou traversée selon l'une quelconque des revendications précédentes, dans lequel au moins une feuille pelable est constituée d'un matériau choisi dans le groupe comprenant : un gel, un gel avec peau, un caoutchouc cellulaire d'EPDM, de NBR, de PUR, de TPE, un caoutchouc mou de silicium, mais également de la gélatine, du liège, du cuir, ou leurs combinaisons.

4. Système d'étanchement comprenant un cadre pour des entrées de câble ou des percées de tuyau recevant des modules compressibles entourant chaque câble ou tuyau reçu dans le cadre, lequel cadre est placé dans une paroi ou une autre cloison structurale formant une ouverture à travers la paroi ou l'autre cloison, moyennant quoi une barrière de modules est placée conjointement avec au moins une unité de compression à une extrémité du cadre, ledit module compressible étant un module selon l'une quelconque des revendications 1 à 3.
